(19) Europäisches Patentamt
European Patent Office
Office européen des brevets

(11) Veröffentlichungsnummer: **0 257 374**
**A1**

(12) **EUROPÄISCHE PATENTANMELDUNG**

(21) Anmeldenummer: **87111239.7**

(22) Anmeldetag: **04.08.87**

(51) Int. Cl.⁴: **C07F 9/38**, C07F 9/40, A01N 57/22

(30) Priorität: **14.08.86 DE 3627615**

(43) Veröffentlichungstag der Anmeldung: **02.03.88 Patentblatt 88/09**

(84) Benannte Vertragsstaaten: **AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Förster, Heinz, Dr.**
**Am Eckbusch 47**
**D-5600 Wuppertal 1(DE)**
Erfinder: **Pfister, Theodor, Dr.**
**Lichtenbergerstrasse 30**
**D-4019 Monheim(DE)**
Erfinder: **Santel, Hans-Joachim, Dr.**
**Gruenstrasse 9a**
**D-5090 Leverkusen 1(DE)**
Erfinder: **Schmidt, Robert R., Dr.**
**Im Waldwinkel 110**
**D-5060 Bergisch-Gladbach 2(DE)**
Erfinder: **Lürssen, Klaus, Dr.**
**August-Kierspel-Strasse 151**
**D-5060 Bergisch-Gladbach 2(DE)**
Erfinder: **Strang, Robert Harry, Dr.**
**Unterdorfstrasse 6A**
**D-4000 Duesseldorf 31(DE)**

(54) **Phenoxybenzoesäure-Derivate.**

(57) Die Erfindung betrifft neue Phenoxybenzoesäure-Derivate der Formel (I)

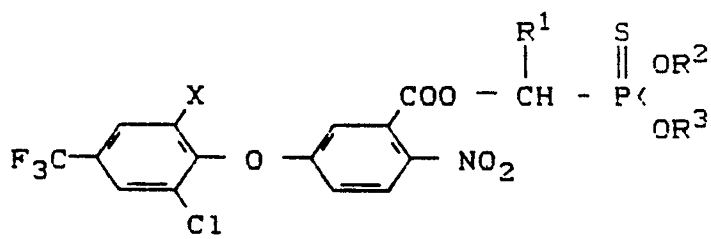

(I)

in welcher

X für Wasserstoff oder Chlor steht,

$R^1$ für Wasserstoff oder Alkyl steht und

$R^2$ und $R^3$ gleich oder verschieden sind und für Wasserstoff oder Alkyl stehen,

EP 0 257 374 A1

Xerox Copy Centre

ein Verfahren zu deren Herstellung sowie ihre Verwendung als Herbizide und Pflanzenwachstumsregulatoren.

## Phenoxybenzoesäure-Derivate

Die Erfindung betrifft neue Phenoxybenzoesäure-Derivate, ein Verfahren zu deren Herstellung sowie ihre Verwendung als Herbizide und Pflanzenwuchsregulatoren.

Es ist bereits bekannt, daß zahlreiche Phenoxybenzoesäure-Derivate herbizide Eigenschaften besitzen (vgl. US-P 4 063 929). So kann zum Beispiel das Natriumsalz der 3-(2-Chlor-4-trifluormethyl-phenoxy)-6-nitro-benzoesäure zur Bekämpfung von Unkraut eingesetzt werden. Die Wirkung dieses Stoffes ist gut, jedoch werden bei geringen Aufwandmengen einige Unkräuter nicht immer voll erfaßt.

Es wurden nun neue Phenoxybenzoesäure-Derivate der Formel (I)

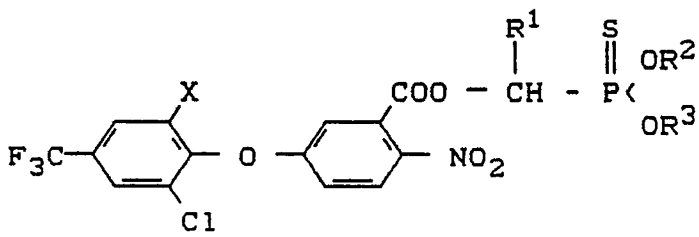

(I)

in welcher

X für Wasserstoff oder Chlor steht,

$R^1$ für Wasserstoff oder Alkyl steht und

$R^2$ und $R^3$ gleich oder verschieden sind und für Wasserstoff oder Alkyl stehen,

gefunden.

Für den Fall, daß $R^1$ nicht für Wasserstoff steht, enthalten die Phenoxybenzoesäure-Derivate der Formel (I) mindestens ein asymmetrisch substituiertes Kohlenstoffatom und können deshalb in verschiedenen enantiomeren Formen vorliegen. Die Erfindung betrifft sowohl die möglichen einzelnen Isomeren, insbesondere die R-Enantiomere, als auch Gemische dieser Isomeren.

Weiterhin wurde gefunden, daß man Phenoxybenzoesäure-Derivate der Formel (I) erhält, wenn man Phenoxybenzoesäurechloride der Formel (II)

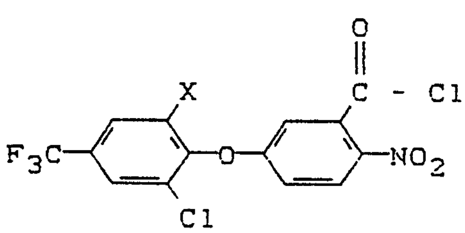

(II)

in welcher

X die oben angegebene Bedeutung hat,

mit Hydroxymethylthionophosphonsäureestern der Formel (III)

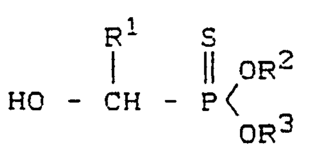

(III)

in welcher

$R^1$, $R^2$ und $R^3$ die oben angegebenen Bedeutungen haben,

gegebenenfalls in Gegenwart eines Säurebindemittels sowie gegebenenfalls in Gegenwart eines Verdünnungsmittels umsetzt.

Schließlich wurde gefunden, daß sich die neuen Phenoxybenzoesäure-Derivate der Formel (I) durch hervorragende herbizide und pflanzenwuchsregulierende Wirkung auszeichnen.

Überraschenderweise sind die erfindungsgemäßen Phenoxybenzoesäure-Derivate der Formel (I) gegen einige wichtige Unkräuter wesentlich wirksamer und besitzen wesentlich bessere selektive Eigenschaften als das Natriumsalz der 3-(2-Chlor-4-trifluormethyl-phenoxy)-6-nitro-benzoesäure, welches ein strukturell ähnlicher, vorbekannter Wirkstoff analoger Wirkungsrichtung ist.

In den Substituentendefinitionen ist die Alkyl-Kohlenstoffkette jeweils geradkettig oder verzweigt.

Die erfindungsgemäßen Phenoxybenzoesäure-Derivate sind durch die Formel (I) allgemein definiert. Bevorzugt sind diejenigen Verbindungen der Formel (I), in welchen

X für Wasserstoff oder Chlor steht,

$R^1$ für Wasserstoff oder Alkyl mit 1 bis 3 Kohlenstoffatomen steht und

$R^2$ und $R^3$ gleich oder verschieden sind und für Wasserstoff oder Alkyl mit 1 bis 6 Kohlenstoffatomen stehen.

Besonders bevorzugt sind diejenigen Verbindungen der Formel (I), in denen

X für Wasserstoff oder Chlor steht,

$R^1$ für Wasserstoff oder Alkyl mit 1 oder 2 Kohlenstoffatomen steht, und

$R^2$ und $R^3$ gleich oder verschiden sind und für Alkyl mit 1 bis 4 Kohlenstoffatomen stehen.

Ganz besonders bevorzugt sind diejenigen Verbindungen der Formel (I), in welchen

X für Wasserstoff oder Chlor steht,

$R^1$ für Wasserstoff oder Methyl steht und

$R^2$ und $R^3$ gleich oder verschieden sind und für Methyl, Ethyl, n-Propyl, i-Propyl, n-Butyl, i-Butyl, sec.-Butyl oder tert.-Butyl stehen.

Als Beispiele für Phenoxybenzoesäure-Derivate der Formel (I) seien die in der folgenden Tabelle formelmäßig aufgeführten Verbindungen genannt:

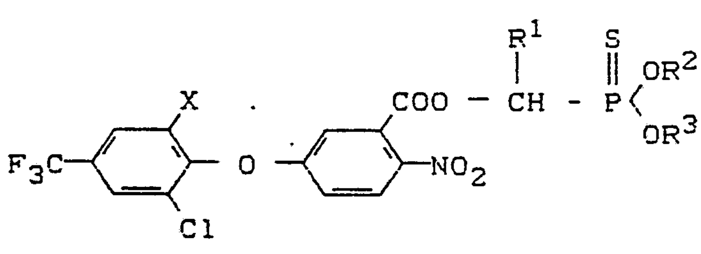

(I)

Tabelle 1

| X | $R^1$ | $R^2$ | $R^3$ |
|---|---|---|---|
| H | H | $CH_3$ | $CH_3$ |
| Cl | H | $CH_3$ | $CH_3$ |
| H | $CH_3$ | $CH_3$ | $CH_3$ |
| Cl | $CH_3$ | $CH_3$ | $CH_3$ |
| H | H | $C_2H_5$ | $C_2H_5$ |
| Cl | H | $C_2H_5$ | $C_2H_5$ |
| H | $CH_3$ | $C_2H_5$ | $C_2H_5$ |
| Cl | $CH_3$ | $C_2H_5$ | $C_2H_5$ |
| H | H | $n-C_3H_7$ | $n-C_3H_7$ |
| Cl | H | $n-C_3H_7$ | $n-C_3H_7$ |
| H | $CH_3$ | $n-C_3H_7$ | $n-C_3H_7$ |
| Cl | $CH_3$ | $n-C_3H_7$ | $n-C_3H_7$ |
| H | H | $i-C_3H_7$ | $i-C_3H_7$ |
| Cl | H | $i-C_3H_7$ | $i-C_3H_7$ |
| H | $CH_3$ | $i-C_3H_7$ | $i-C_3H_7$ |
| Cl | $CH_3$ | $i-C_3H_7$ | $i-C_3H_7$ |
| H | H | $n-C_4H_9$ | $n-C_4H_9$ |
| Cl | H | $n-C_4H_9$ | $n-C_4H_9$ |
| H | $CH_3$ | $n-C_4H_9$ | $n-C_4H_9$ |
| Cl | $CH_3$ | $n-C_4H_9$ | $n-C_4H_9$ |

Verwendet man Hydroxymethylthionophosphonsäurediethylester und 3-(2,6-Dichlor-4-trifluormethyl-phenoxy)-6-nitrobenzoesäurechlorid als Ausgangsstoffe, so kann der Verlauf des erfindungsgemäßen Verfahrens durch das folgende Formelschema wiedergegeben werden:

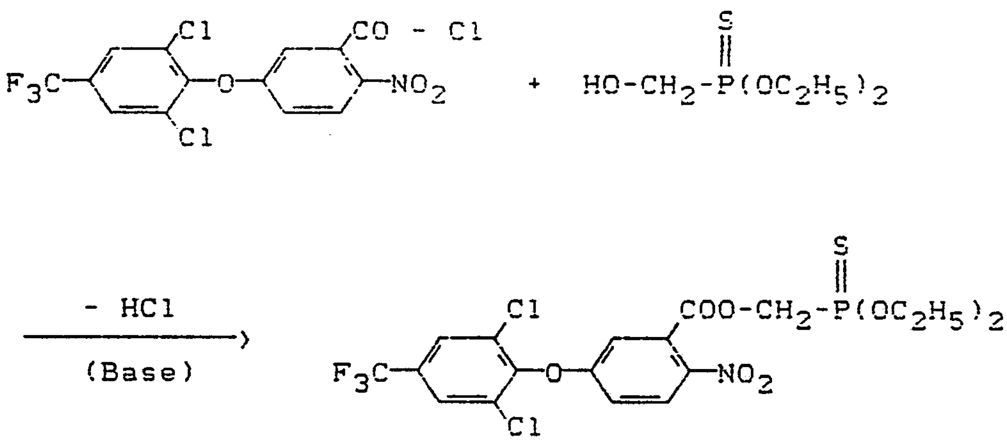


Die bei dem erfindungsgemäßen Verfahren als Ausgangsstoffe benötigten Phenoxybenzoesäurechloride sind durch die Formel (II) definiert. In dieser Formel steht X vorzugsweise für Wasserstoff oder Chlor.

Als Beispiele für die Verbindungen der Formel (II) seien genannt:

3-(2-Chlor-4-trifluormethyl-phenoxy)-6-nitro-benzoesäurechlorid und 3-(2,6-Dichlor-4-trifluormethyl-phenoxy)-6-nitro-benzoesäurechlorid.

Die Phenoxybenzoesäurechloride der Formel (II) sind bekannt oder lassen sich nach bekannten Verfahren in einfacher Weise herstellen (vgl. DE-OS 2 311 638 und EP-OS 63 741).

Die bei dem erfindungsgemäßen Verfahren weiterhin als Ausgangsstoffe benötigten Hydroxymethylthionophosphonsäureester sind durch die Formel (III) definiert. In dieser Formel haben $R^1$, $R^2$ und $R^3$ vorzugsweise diejenigen Bedeutungen, die bereits im Zusammenhang mit der Beschreibung der erfindungsgemäßen Stoffe der Formel (I) vorzugsweise für diese Substituenten genannt wurden.

Die Verbindungen der Formel (III) sind zum Teil neu. Neu sind die Hydroxymethylthionophosphonsäureester der Formel (IIIa)

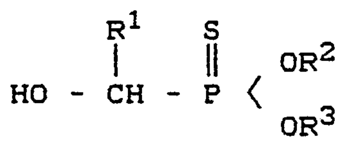
(IIIa)

in welcher

$R^1$ für Wasserstoff oder Alkyl steht und

$R^2$ und $R^3$ gleich oder verschieden sind und für Wasserstoff oder Alkyl stehen,

wobei jedoch die folgende Verbindung ausgeschlossen ist: O,O-Dimethyl-hydroxymethylthionophosphonsäureester (vgl. z.B. CA 91 : 4854 h).

In der Formel (IIIa) haben $R^1$, $R^2$ und $R^3$ vorzugsweise bzw. besonders bevorzugt diejenigen Bedeutungen, die bereits im Zusammenhang mit der Beschreibung der erfindungsgemäßen Stoffe der Formel (I) vorzugsweise bzw. besonders bevorzugt für diese Substituenten genannt wurden.

Die neuen Verbindungen der Formel (IIIa) lassen sich nach allgemein bekannten Methoden herstellen, indem man z.B. Thiophosphorigsäureester der Formel (IV)

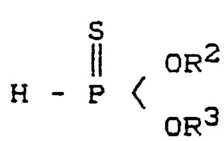
(IV)

in welcher

$R^2$ und $R^3$ die oben angegebenen Bedeutungen haben,

mit Aldehyden der Formel (V)

$R^1$ -CHO (V)

in welcher

$R^1$ die oben angegebene Bedeutung hat,

gegebenenfalls in Gegenwart von basischen Katalysatoren wie z.B. Triethylamin oder Natriumhydroxid und gegebenenfalls in Gegenwart von Verdünnungsmitteln wie z.B. Toluol bei Temperaturen zwischen 20 °C und 120 °C umsetzt.

Die Verbindungen der Formeln (IV) und (V) sind allgemein bekannte Verbindungen der organischen Chemie.

Als Beispiele für Hydroxymethylthionophosphonsäureester der Formel (III) seien die in der folgenden Tabelle formelmäßig aufgeführten Verbindungen genannt:

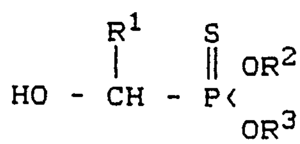

(III)

Tabelle 2

| $R^1$ | $R^2$ | $R^3$ |
|---|---|---|
| H | $C_2H_5$ | $C_2H_5$ |
| $CH_3$ | $C_2H_5$ | $C_2H_5$ |
| H | $n-C_3H_7$ | $n-C_3H_7$ |
| $CH_3$ | $n-C_3H_7$ | $n-C_3H_7$ |
| H | $i-C_3H_7$ | $i-C_3H_7$ |
| $CH_3$ | $i-C_3H_7$ | $i-C_3H_7$ |
| H | $n-C_4H_9$ | $n-C_4H_9$ |
| $CH_3$ | $n-C_4H_9$ | $n-C_4H_9$ |
| H | $CH_3$ | $CH_3$ |
| $CH_3$ | $CH_3$ | $CH_3$ |
| $C_2H_5$ | $CH_3$ | $CH_3$ |
| $C_2H_5$ | $C_2H_5$ | $C_2H_5$ |

Das erfindungsgemäße Verfahren zur Herstellung der neuen Phenoxybenzoesäure-Derivate der Formel (I) wird vorzugsweise unter Verwendung von Verdünnungsmitteln durchgeführt. Als Verdünnungsmittel kommen dabei praktisch alle inerten organischen Lösungsmittel infrage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl-und Dibutylether, Glykoldimethylether und Diglykoldimethylether, Tetrahydrofuran und Dioxan, Ketone wie Acetone, Methyl-ethyl-, Methyl-isopropyl-und Methylisobutyl-keton, Ester wie Essigsäuremethylester und -ethylester, Nitrile wie z.B. Acetonitril und Propionitril, Amide wie z.B. Dimethylformamid, Dimethylacetamid und N-Methyl-pyrrolidon sowie Dimethylsulfoxid und Tetramethylensulfon.

Als Säurebindemittel können bei dem erfindungsgemäßen Verfahren alle üblicherweise für derartige Umsetzungen verwendbaren Säurebindemittel eingesetzt werden. Vorzugsweise in Frage kommen Alkalimetallhydroxide wie z.B. Natrium-und Kaliumhydroxid, Erdalkalihydroxide wie z.B. Calciumhydroxid, Alkalicarbonate und -alkoholate wie Natrium-und Kaliumcarbonat, Natrium-und Kaliummethylat bzw. -ethylat, ferner aliphatische, aromatische oder heterocyclische Amine, beispielsweise Triethylamin, Trimethylamin, Dimethylanilin, Dimethylbenzylamin, Pyridin, 1,5-Diaza-bicyclo-[4,3,0]-nonen-5 (DBN) und 1,8-Diazabicyclo-[5,4,0]-undec-7-en (DBU).

Die Reaktionstemperaturen können bei dem erfindungsgemäßen Verfahren zur Herstellung der Phenoxybenzoesäure-Derivate der Formel (I) in einem größeren Bereich variiert werden. Im allgemeinen arbeitet man bei Temperaturen zwischen -20 °C und +100 °C, vorzugsweise bei Temperaturen zwischen -10 °C und +80 °C.

Das erfindungsgemäße Verfahren wird im allgemeinen unter Normaldruck durchgeführt. Es ist jedoch auch möglich, unter erhöhtem oder vermindertem Druck zu arbeiten.

BAD ORIGINAL

Zur Durchführung des erfindungsgemäßen Verfahrens werden die jeweils benötigten Ausgangsstoffe im allgemeinen in angenähert äquimolaren Mengen eingesetzt. Es ist jedoch auch möglich, eine der beiden jeweils eingesetzten Komponenten in einem größeren Überschuß zu verwenden. Die Reaktionen werden im allgemeinen in einem geeigneten Verdünnungsmittel in Gegenwart eines Säureakzeptors durchgeführt, und das Reaktionsgemisch wird mehrere Stunden bei der jeweils erforderlichen Temperatur gerührt. Die Aufarbeitung erfolgt bei dem erfindungsgemäßen Verfahren jeweils nach üblichen Methoden. Im allgemeinen verfährt man in der Weise, daß man das Reaktionsgemisch nach beendeter Umsetzung in Eiswasser gießt, absaugt bzw. extrahiert und das anfallende Produkt gegebenenfalls durch Umkristallisieren reinigt.

Die erfindungsgemäßen Wirkstoffe beeinflussen das Pflanzenwachstum und können deshalb als Defoliants, Desiccants, Krautabtötungsmittel und insbesondere als Unkrautvernichtungsmittel, aber auch als Pflanzenwachstumsregulatoren verwendet werden. Unter Unkraut im weitesten Sinne sind alle Pflanzen zu verstehen, die an Orten aufwachsen, so sie unerwünscht sind. Ob die erfindungsgemäßen Stoffe als totale oder selektive Herbizide oder als Pflanzenwachs tumsregulatoren wirken, hängt im wesentlichen von der angewendeten Menge ab. Die erfindungsgemäßen Wirkstoffe können z.B. bei den folgenden Pflanzen verwendet werden:

Dikotyle Unkräuter der Gattungen:Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen:Gossypium, Glycine, Beta, Daucus, Phaseolus, Pisum, Solanum, Linum, Ipomoea, Vicia, Nicotisns, Lycopersicon, Arachis, Brassica, Lactuca, Cucumis, Cucurbita.

Monokotyle Unkräuter der Gattungen:Echinochloa, Setaria, Panicum, Digitaria, Phleum, Poa, Festuca, Eleusine, Brachiaria, Lolium, Bromus, Avena; Cyperus, Sorghum, Agropyron, Cynodon, Monochoria, Fimbristylis, Sagittaria, Eleocharis, Scirpus, Paspalum, Ischaemum, Sphenoclea, Datyloctenium, Agrostis, Alopecurus, Epera.

Monokotyle Kulturen der Gattungen:Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen. Die Verbindungen eignen sich in Abhängigkeit von der Konzentration zur Totalunkrautbekämpfung z.B. auf Industrie-und Gleisanlagen und auf Wegen und Plätzen mit und ohne Baumbewuchs. Ebenso können die Verbindungen zur Unkrautbekämpfung in Dauerkulturen, z.B. Forst-, Ziergehölz-, Obst-, Wein-, Citrus-, Nuß-, Bananen-, Kaffee-, Tee-, Gummi-, Ölpalm-, Kakao-, Beerenfrucht-und Hopfenanlagen und zur selektiven Unkrautbekämpfung in einjährigen Kulturen eingesetzt werden.

Die erfindungsgemäßen Wirkstoffe eignen sich sehr gut zur selektiven Bekämpfung dikotyler Unkräuter in monokotylen Kulturen wie z.B. Mais im Vor-und insbesondere im Nachauflaufverfahren.

Die erfindungsgemäßen Wirkstoffe greifen in den Metabolismus der Pflanzen ein und können deshalb als Wachstumsregulatoren eingesetzt werden.

Für die Wirkungsweise von Pflanzenwachstumsregulatoren gilt nach der bisherigen Erfahrung, daß ein Wirkstoff auch mehrere verschiedenartige Wirkungen auf Pflanzen ausüben kann. Die Wirkungen der Stoffe hängen im wesentlichen ab von dem Zeitpunkt der Anwendung bezogen auf das Entwicklungsstadium der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in bestimmter gewünschter Weise beeinflussen.

Unter dem Einfluß von Wachstumsregulatoren kann der Blattbestand der Pflanzen so gesteuert werden, daß ein Entblättern der Pflanzen zu einem gewünschten Zeitpunkt erreicht wird. Eine derartige Entlaubung spielt bei der mechanischen Beerntung der Baumwolle eine große Rolle ist aber auch in anderen Kulturen wie z.B. im Weinbau zur Erleichterung der Ernte von Interesse. Eine Entlaubung der Pflanzen kann auch vorgenommen werden, um die Transpiration der Pflanzen vor dem Verpflanzen herabzusetzen.

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Suspensions-Emulsions-Konzentrate, wirkstoffimprägnierte Natur-und synthetische Stoffe, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier und/oder - schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalo cyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen in Mischung mit anderen bekannten Wirkstoffen vorliegen, wie Fungizide, Insektizide, Akarizide und Herbizide sowie in Mischungen mit Düngemitteln und anderen Wachstumsregulatoren.

Für die Mischungen können bekannte Herbizide verwendet werden wie z. B. 4-Amino-6-(1,1-dimethylethyl)-3-methylthio-1,2,4-triazin-5(4H)-on, 4-Amino-6-(1,1-dimethylethyl)-3-ethylthio-1,2,4-triazin-5-(4H)-on, 1-Amino-6-ethylthio-3-(2,2-dimethylpropyl)-1,3,5-triazin-2,4-(1H,3H)-dion, 2-Chlor-N-(2,6-diethyl-phenyl)-N-(methoxymethyl)-acetamid, 2-Chlor-N-(2-ethyl-6-methyl-phenyl)-N-(2-methoxy-1-methylethyl)-acetamid, 2-Chlor-N-(1-methylethyl)-N-(3,5,5-trimethyl-1-cyclohexen-1-yl)-acetamid, 2,4-Dichlorphenoxyessigsäure, 2-(2,4-Dichlorphenoxy)-propionsäure, 4-Chlor-2-methylphenoxy-essigsäure, 2-(4-Chlor-2-methyl-phenoxy)-propionsäure, 3,5-Diiod-4-hydroxy-benzonitril, 2-Chlor-4-ethylamino-6-(1-methylethyl)-1,3,5-triazin, 2-Chlor-4-(1-cyano-1-methylethylamino)-6-ethylamino-1,3,5-triazin, 0-(6-Chlor-3-phenyl-pyridazin-4-yl)-5-octylthiokohlensäureester und 3-Isopropyl-2,1,3-benzothiadiazinon-(4)-2,2-dioxid. Einige Mischungen besitzen überraschenderweise auch synergistische Wirkung.

Die erfindungsgemäßen Wirkstoffe können sowohl vor als auch nach dem Auflaufen der Pflanzen appliziert werden. Die Anwendung wird vorzugsweise nach dem Auflaufen der Pflanzen, also im post-emergence-Verfahren, vorgenommen. Sie können auch vor der Saat in den Boden eingearbeitet werden.

Die angewandte Wirkstoffmenge kann bei der Anwendung als Herbizid in einem größeren Bereich - schwanken. Sie hängt im wesentlichen von der Art des gewünschten Effektes ab. Im allgemeinen liegen die Aufwandmengen zwischen 0,01 und 10 kg Wirkstoff pro Hektar Bodenfläche, vorzugsweise zwischen 0,05 und 5 kg pro ha.

Die Aufwandmengen können bei der Anwendung als Wachstumsregulator in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung der Wachstumsregulatoren in einem bevorzugten Zeitraum vorgenommen wird, dessen genaue Abgrenzung sich nach den klimatischen und vegetativen Gegebenheiten richtet.

Die Herstellung und die Verwendung der erfindungsgemäßen Wirkstoffe geht aus den nachfolgenden Beispielen hervor.

## Herstellungsbeispiele

### Beispiel 1

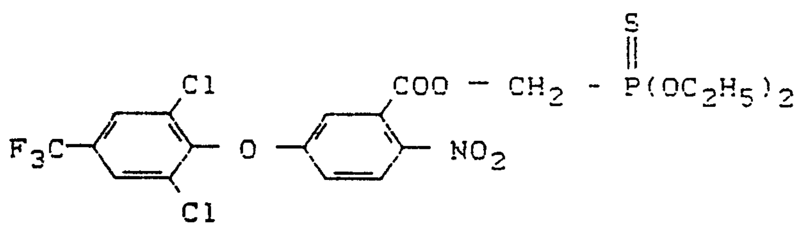

2,6 g (0,014 Mol) Hydroxymethanthionophosphonsäurediethylester und 1,4 g (0,08 Mol) Pyridin werden in 20 ml Methylenchlorid gelöst und bei -5°C mit einer Lösung aus 5,8 g (0,014 Mol) 3-(2,6-Dichlor-4-trifluormethyl-phenoxy)-6-nitro-benzoesäurechlorid in 10 ml Methylenchlorid tropfenweise versetzt. Die Reaktionsmischung wird dann 12 Stunden bei 20 °C nachgerührt. Zur Aufarbeitung wird die organische Phase je einmal mit verdünnter Salzsäure und 200 ml gesättigter Natriumhydrogencarbonatlösung und Wasser extrahiert. Die organische Phase wird dann über Natriumsulfat getrocknet und eingeengt.

Man erhält 5,3 g (69 % der Theorie) 3-(2,6-Dichlor-4-trifluormethyl-phenoxy)-6-nitro-benzoesäure-(diethoxythionophosphonyl)-methylester vom Brechungsindex $n_D^{20}$ : 1,5451.

Analog Beispiel 1 und den allgemeinen Angaben zur Herstellung können die folgenden Verbindungen der Formel (I) erhalten werden:



BAD ORIGINAL

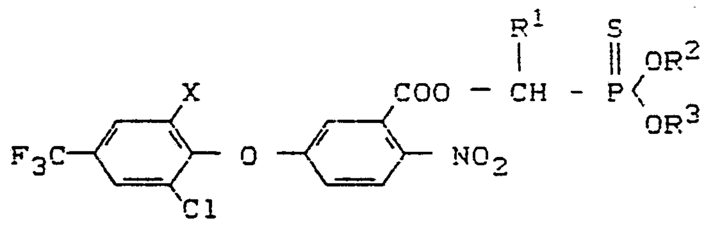

(I)

Tabelle 3

| Beisp.-Nummer | X | $R^1$ | $R^2$ | $R^3$ | Phys. Konstante |
|---|---|---|---|---|---|
| 2 | H | $CH_3$ | $CH_3$ | $CH_3$ | $n_D^{20}$ : 1,5609 |
| 3 | H | $CH_3$ | $C_2H_5$ | $C_2H_5$ | $n_D^{20}$ : 1,5279 |
| 4 | Cl | $CH_3$ | $C_2H_5$ | $C_2H_5$ | $n_D^{20}$ : 1,5404 |
| 5 | H | H | $C_2H_5$ | $C_2H_5$ | $n_D^{20}$ : 1,5444 |
| 6 | H | H | $C_4H_9$-n | $C_4H_9$-n | $n_D^{20}$ : 1,5273 |
| 7 | H | H | $CH_3$ | $CH_3$ | $n_D^{20}$ : 1,5553 |

Tabelle 3 - Fortsetzung

| Beisp.- Nummer | X | $R^1$ | $R^2$ | $R^3$ | Phys. Konstante |
|---|---|---|---|---|---|
| 8 | Cl | $CH_3$ | $CH_3$ | $CH_3$ | $n_D^{20}$ : 1,5400 |
| 9 | H | H | $C_3H_7$-n | $C_3H_7$-n | |
| 10 | Cl | H | $C_3H_7$-n | $C_3H_7$-n | |
| 11 | H | H | $CH(CH_3)_2$ | $CH(CH_3)_2$ | |
| 12 | Cl | H | $CH(CH_3)_2$ | $CH(CH_3)_2$ | |
| 13 | Cl | $CH_3$ | $CH_3$ | $CH_3$ | |
| 14 | H | $C_2H_5$ | $CH_3$ | $CH_3$ | |
| 15 | Cl | H | $CH_3$ | $CH_3$ | |

Ausgangsstoffe der Formel (IIIa)

Beispiel (IIIa-1)

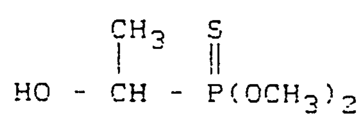

42 g (0,33 Mol) O,O-Dimethyl-thiophosphorigsäureester und 50 g (1,14 Mol) Acetaldehyd werden vorgelegt, mit 0,1 g Natriumhydroxid versetzt und 2 Stunden unter Rückfluß erhitzt. Nach Zugabe von 200 ml Toluol wird die organische Phase zweimal mit jeweils 100 ml Wasser gewaschen und eingeengt. Das Reaktionsprodukt wird ohne weitere Reinigung verwendet.

Man erhält 47 g (84 % der Theorie) 2-Hydroxyethan-thionophosphonsäurediethylester vom Brechungsindex $n_D^{20}$ : 1,4882.

Analog Beispiel (IIIa-1) können die folgenden Verbindungen der Formel (IIIa) hergestellt werden:

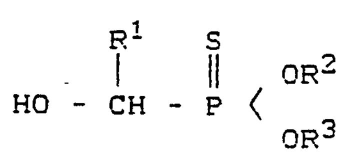

(IIIa)



BAD ORIGINAL

Tabelle 4

| Beisp. Nr. | $R^1$ | $R^2$ | $R^3$ | Phys. Konstante |
|---|---|---|---|---|
| IIIa-2 | H | $C_2H_5$ | $C_2H_5$ | $n_D^{20}$ : 1,4808 |
| IIIa-3 | $CH_3$ | $C_2H_5$ | $C_2H_5$ | $n_D^{20}$ : 1,4754 |
| IIIa-4 | H | $C_4H_9$-n | $C_4H_9$-n | $n_D^{20}$ : 1,4712 |
| IIIa-5 | $C_2H_5$ | $CH_3$ | $CH_3$ | $n_D^{20}$ : 1,4950 |
| IIIa-6 | $C_2H_5$ | $C_2H_5$ | $C_2H_5$ | Kp : 75 °C/ 150 Pascal |
| IIIa-7 | $CH_3$ | $C_4H_9$-n | $C_4H_9$-n | Kp : 107 °C/ 50 Pascal |
| IIIa-8 | H | $C_3H_7$-i | $C_3H_7$-i | $n_D^{20}$ : 1,4653 |
| IIIa-9 | $CH_3$ | $C_3H_7$-i | $C_3H_7$-i | $n_D^{20}$ : 1,4619 |

Anwendungsbeispiele

In den folgenden Anwendungsbeispielen wird die nachstehend aufgeführte Verbindung als Vergleichssubstanz herangezogen:

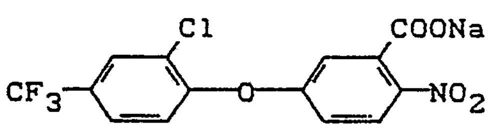

(A)

Natriumsalz der 3-(2-Chlor-4-trifluormethyl-phenoxy)-6-nitro-benzoesäure

(bekannt aus US-P 4 063 929).

Beispiel A



BAD ORIGINAL

Pre-emergence-Test Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % keine Wirkung (wie unbehandelte Kontrolle)
100 % = totale Vernichtung

In diesem Test zeigen die Wirkstoffe gemäß Beispiel (1) und (7) bei der Bekämpfung von dikotylen Unkräutern wie z.B. Portulak und Solanum eine bessere Wirksamkeit und Verträglichkeit als die Vergleichssubstanz (A).

<u>Beispiel B</u>

Post-emergence-Test Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.
Es bedeuten:

0 % = keine Wirkung (wie unbehandelte Kontrolle)
100 % = totale Vernichtung

In diesem Test zeigt z. B. der Wirkstoff gemäß Beispiel (7), bei der Bekämpfung von Cassia, Ipomoea, Sida und Chenopodium in Mais eine bessere selektive herbizide Wirksamkeit und eine bessere Verträglichkeit als die Vergleichssubstanz (A).

<u>Beispiel C</u>

<u>Entlaubung und Austrocknung der Blätter bei Baumwolle</u>Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Baumwollpflanzen werden im Gewächshaus bis zur vollen Entfaltung des 5. Folgeblattes angezogen. Im diesem Stadium werden die Pflanzen tropfnaß mit den Wirkstoffzubereitungen besprüht. Nach 1 Woche werden der Blattfall und das Austrocknen der Blätter im Vergleich zu den Kontrollpflanzen bonitiert. Es bedeuten:

0 kein Austrocknen der Blätter, kein Blattfall
\+ leichtes Austrocknen der Blätter, geringer Blattfall
\+ + starkes Austrocknen der Blätter, starker Blattfall
\+ + + sehr starkes Austrocknen der Blätter, sehr starker Blattfall

**Ansprüche**

1. Phenoxybenzoesäure-Derivate der Formel (I),

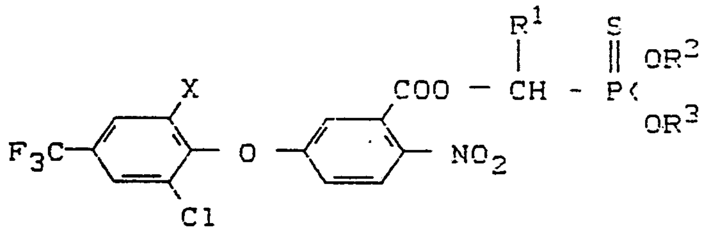

(I)

in welcher

X für Wasserstoff oder Chlor steht,

$R^1$ Wasserstoff oder Alkyl steht und

$R^2$ und $R^3$ gleich oder verschieden sind und für Wasserstoff oder Alkyl stehen.

2. Phenoxybenzoesäure-Derivate der Formel (I) gemäß Anspruch 1, in welcher

X für Wasserstoff oder Chlor steht,

$R^1$ für Wasserstoff oder Alkyl mit 1 bis 3 Kohlenstoffatomen steht und

$R^2$ und $R^3$ gleich oder verschieden sind und für Wasserstoff oder Alkyl mit 1 bis 6 Kohlenstoffatomen stehen.

3. Phenoxybenzoesäure-Derivate der Formel (I) gemäß Anspruch 1, in welcher

X für Wasserstoff oder Chlor steht,

$R^1$ für Wasserstoff oder Alkyl mit 1 oder 2 Kohlenstoffatomen steht, und

$R^2$ und $R^3$ gleich oder verschieden sind und für Alkyl mit 1 bis 4 Kohlenstoffatomen stehen.

4. Verfahren zur Herstellung von Phenoxybenzoesäure-Derivaten der Formel (I),

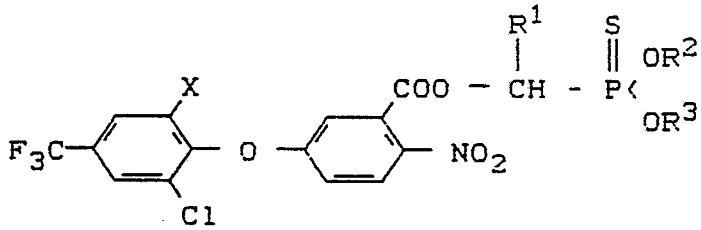

(I)

in welcher

X für Wasserstoff oder Chlor steht,

$R^1$ für Wasserstoff oder Alkyl steht und



BAD ORIGINAL

$R^2$ und $R^3$ gleich oder verschieden sind und für Wasserstoff oder Alkyl stehen,

dadurch gekennzeichnet, daß man Phenoxybenzoesäurechloride der Formel (II),

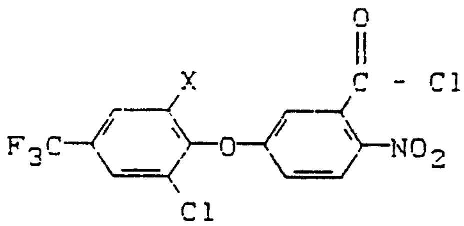

(II)

in welcher

X die oben angegebene Bedeutung hat,

mit Hydroxymethylthionophosphonsäureestern der Formel (III)

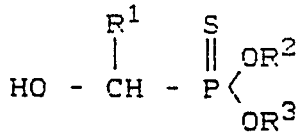

(III)

in welcher

$R^1$, $R^2$ und $R^3$ die oben angegebenen Bedeutungen haben,

gegebenfalls in Gegenwart eines Säurebindemittels sowie gegebenenfalls in Gegenwart eines Verdünnungsmittels umsetzt.

5. Herbizide und pflanzenwuchsregulierende Mittel, gekennzeichnet durch einen Gehalt an mindestens einem Phenoxybenzoesäure-Derivat der Formel (I) gemäß den Ansprüchen 1 bis 4.

6. Verfahren zur Bekämpfung von Unkräutern, dadurch gekennzeichnet, daß man Phenoxybenzoesäure-Derivate der Formel (I) gemäß den Ansprüchen 1 bis 4 auf die Unkräuter und/oder ihren Lebensraum einwirken läßt.

7. Verwendung von Phenoxybenzoesäure-Derivaten der Formel (I) gemäß den Ansprüchen 1 bis 4 zur Bekämpfung von Unkräutern und/oder als Pflanzenwachstumsregulatoren.

8. Verfahren zur Herstellung von herbiziden und/oder pflanzenwuchsregulierenden Mitteln, dadurch gekennzeichnet, daß man Phenoxybenzoesäure-Derivate der Formel (I) gemäß den Ansprüchen 1 bis 4 mit Streckmitteln und/oder oberflächenaktiven Substanzen vermischt.

9. Hydroxymethylthionophosphonsäureester der Formel (IIIa)

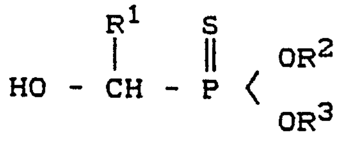

(IIIa)

in welcher

$R^1$ für Wasserstoff oder Alkyl steht und

$R^2$ und $R^3$ gleich oder verschieden sind und für Wasserstoff oder Alkyl stehen,

wobei jedoch die Verbindung O,O-Dimethyl-hydroxymethylthionophosphonsäureester ausgeschlossen ist.



BAD ORIGINAL

10. Verfahren zur Herstellung von Hydroxymethylthionophosphonsäureestern der Formel (IIIa)

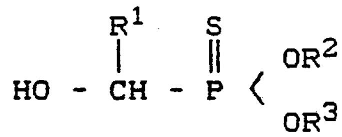 (IIIa)

in welcher

$R^1$ für Wasserstoff oder Alkyl steht und

$R^2$ und $R^3$ gleich oder verschieden sind und für Wasserstoff oder Alkyl stehen,

wobei jedoch die Verbindung O,O-Dimethyl-hydroxymethylthionophosphonsäureester ausgeschlossen ist, dadurch gekennzeichnet, daß man Thiophosphorigsäureester der Formel (IV)

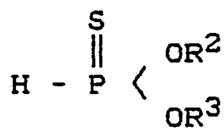 (IV)

in welcher

$R^2$ und $R^3$ die oben angegebenen Bedeutungen haben,

mit Aldehyden der Formel (V)

$R^1$ -CHO (V)
in welcher

$R^1$ die oben angegebene Bedeutung hat,

gegebenenfalls in Gegenwart von basischen Katalysatoren und gegebenenfalls in Gegenwart von Verdünnungsmitteln umsetzt.

Europäisches Patentamt

# EUROPÄISCHER RECHERCHENBERICHT

Nummer der Anmeldung

EP 87 11 1239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 165 203 (CIBA-GEIGY)<br>* Ansprüche *<br>--- | 1,5-8 | C 07 F 9/38<br>C 07 F 9/40<br>A 01 N 57/22 |
| P,Y | EP-A-0 220 635 (BAYER AG)<br>* Ansprüche *<br>--- | 1,5-8 | |
| X | ACS SYMP. SER., Band 171, (Phosphorus Chem.), 1981, Seiten 55-58, American Chemical Society, US; M. MIKOKAJCZYK et al.: "Phosphonates containing sulfur and selenium: synthesis, reactions, and new applications"<br>* Seite 56, Verbindungen der Formel 6 *<br>----- | 9,10 | |
| | | | **RECHERCHIERTE SACHGEBIETE (Int. Cl.4)** |
| | | | C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 17-09-1987 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82